# EUROPÄISCHE PATENTSCHRIFT

(11) **EP 2 719 641 B1**
(45) Veröffentlichungstag und Bekanntmachung des Hinweises auf die Patenterteilung: **25.02.2015**
(21) Anmeldenummer: 12187859.9
(22) Anmeldetag: 09.10.2012
(51) Int. Cl.: B65G 1/137, B65G 47/88, G07F 17/00

(54) **Lager- und Kommissionierautomat für Kleinstückgüter**
Storage and automatic picking machine for small piece-goods
Automate de stockage et de conditionnement pour petits objets

(43) Veröffentlichungstag der Anmeldung: 16.04.2014
(73) Patentinhaber: CareFusion Germany 326 GmbH, 53539 Kelberg (DE)
(72) Erfinder: Hellenbrand, Christoph, 56761 Kaifenheim (DE)
(74) Vertreter: Zenz

(56) Entgegenhaltungen:
- EP-A1- 2 256 703
- EP-A2- 0 909 725
- US-A1- 2006 277 269

## Beschreibung

Die Erfindung betrifft einen Lager- und Kommissionierautomaten für Kleinstückgüter mit wenigstens einem Lagerregal mit Lagerflächen zur geordneten Lagerung der Kleinstückgüter, wenigstens einem benachbart zu dem Lagerregal verfahrbaren Regalbediengerät, das jeweils ein oder mehrere Kleinstückgüter von einer Lagerfläche entnehmen und zu wenigstens einem Abgabeort transportieren kann, und wenigstens einem Bandförderer, der ein wenigstens ein Band aufweist und die zu dem wenigstens einen Abgabeort transportieren Kleinstückgüter an einem dem Abgabeort zugeordneten Aufnahmeabschnitt des Bandförderers empfangen und zu einer Abgabevorrichtung transportieren kann (siehe z.B. EP 2 256 703 A1).

Ein Lager- und Kommissionierautomat der eingangs genannten Art ist beispielsweise der von der Anmelderin hergestellte Kommissionierautomat vom Typ "Rowa Vmax", wie er in der Firmenbroschüre "Automatisierte Warenlager für leistungsfähige Apotheken", 2011/2012 beschrieben ist. Dieser Kommissionierautomat weist innerhalb eines quaderförmigen langgestreckten Gehäuses an den beiden einander gegenüberliegenden Längswandungen angeordnete Lagerregale mit horizontalen Lagerflächen auf, wobei zwischen den beiden Lagerregalen eine Gasse gebildet ist, in der ein Regalbediengerät verfahren werden kann. Das Regalbediengerät weist einen Backengreifer auf, wie er beispielsweise in der Druckschrift EP 2 165 950 A1 beschrieben ist. Mit diesem Greifer, der horizontal entlang der Gasse und vertikal verfahren sowie zur Bedienung der einander gegenüberliegenden Regalflächen um eine vertikale Achse gedreht werden kann, werden jeweils ein oder mehrere Kleinstückgüter, nämlich Arzneimittelpackungen (z.B. quaderförmige oder zylindrische Packungen oder Flaschen), von den Lagerflächen einzeln oder zu mehreren gleichzeitig entnommen, wobei die entnommenen Kleinstückgüter anschließend von dem Regalbediengerät zu einem an die Gasse angrenzenden Abgabeort transportiert werden und dort von dem Bediengerät auf eine Rutsche und/oder einen Bandförderer abgegeben werden können. Beispielsweise ist auf Seite 20 der oben genannten Firmenbroschüre ein solcher Kommissionierautomat dargestellt, bei dem sich die Abgabestelle im oberen Bereich der Stirnseite befindet, wobei sich an die Abgabestelle ein Förderband anschließt, welches die von dem Bediengerät ausgelagerten Arzneimittelpackungen aufnimmt und zu einer ebenfalls dargestellten Wendelrutsche befördert, wobei die Wendelrutsche die Packungen zu einer Ausgabestelle im Offizin einer Apotheke transportiert.

Aus der Druckschrift EP 1 902 976 A1 ist ein abweichend gestalteter Kommissionierautomat bekannt, bei dem das Regalbediengerät ausgelagerte Packungen an mehreren Abgabeorten auf einem sich entlang eines Regals erstreckenden Förderband abgeben kann.

Der bekannte Kommissionierautomat wird überwiegend in herkömmlichen Apotheken eingesetzt. Dort ist es üblich, dass ein Kunde (mit oder ohne Rezept) maximal wenige Arzneimittelpackungen erhält. Dementsprechend muss das Regalbediengerät innerhalb des Zeitraums, in dem der Kunde von dem Apotheker bedient wird, eine Packung oder wenige Packungen auslagern, die dann über ein Transportband und gegebenenfalls eine Wendelrutsche zu einem Ausgabeplatz im Offizin der Apotheke transportiert werden. Die Menge oder Gruppe der jeweils für einen Adressaten (Kunden) auszulagernden Arzneimittelpackungen wird hier als Kommission bezeichnet. Selbst dann, wenn in normalen Apotheken ein relativ großer Andrang herrscht, also mehrere Kunden innerhalb kurzer Zeiträume zu bedienen sind, kommt es aufgrund der geringen Größe der Kommissionen (geringe Anzahl von Packungen einer Kommission) in der Regel nicht vor, dass die Kommissionen aufeinanderfolgend bedienter Kunden miteinander vermischt werden und deshalb Packungen einer falschen Kommission zugeordnet werden.

Wird jedoch ein Kommissionierautomat in Krankenhausapotheken oder Apotheken für Pflegeheime verwendet, so kann sich die Situation etwas anders darstellen. Dort kann eine Kommission beispielsweise die für eine bestimmte Station des Krankenhauses oder Pflegeheims vorgesehenen Arzneimittelpackungen umfassen, so dass eine Kommission eine Vielzahl von Packungen umfassen kann. Darüber hinaus werden regelmäßig verschiedene Kommissionen unmittelbar nacheinander durch das Bediengerät (oder mehrere Bediengeräte) aus den Lagerregalen ausgelagert und auf ein Auslagerungstransportband gelegt. Die Kommissionen werden dann üblicherweise zu einer Abgabevorrichtung transportiert, an der die Kommissionen in Transportkisten abgegeben werden. In Abhängigkeit von dem Lagerort der Arzneimittelpackungen innerhalb des Lagers kann es zu unterschiedlich langen Transportwegen des Regalbediengerätes zwischen dem Lagerort und dem Abgabeort kommen so dass die Arzneimittelpackungen mal in kürzeren und mal in längeren Abständen auf dem Bandförderer eintreffen. Dabei kann selbstverständlich auch der Fall eintreten, dass zu ein und derselben Kommission gehörende Packungen mit größerem Abstand auf dem Transportband aufliegen, während aufeinanderfolgende Packungen verschiedener Kommissionen zum Teil einen relativ geringen Abstand auf dem Band haben können. In diesem Fall besteht die Gefahr, dass eine erste Packung einer nachfolgenden Kommission versehentlich noch in die Transportkiste der vorhergehenden Kommission abgegeben wird. Um dies zu vermeiden, wird üblicherweise der Abstand zwischen der letzten Packung einer ersten Kommission und der ersten Packung einer nachfolgenden Kommission aus Sicherheitsgründen so groß gewählt, dass ein sicherer Wechsel der Transportkisten ermöglicht wird. Dies führt jedoch zu einer insgesamt längeren Zeit für die Auslagerung der Kommissionen.

Aufgabe der Erfindung ist es daher, die Auslagerung unter den genannten Bedingungen zu verbessern.

Diese Aufgabe wird erfindungsgemäß durch einer Lager- und Kommissionierautomaten für Kleinstückgüter mit den Merkmalen des Anspruchs 1 gelöst.

Der Lager- und Kommissionierautomat für Kleinstückgüter weist wenigstens ein Lagerregal mit Lagerflächen zur geordneten Lagerung der Kleinstückgüter, wenigstens ein benachbart zu dem Lagerregal verfahrbares Regalbediengerät, das jeweils ein oder mehrere Stückgüter von einer Lagerfläche entnehmen und zu wenigstens einem Abgabeort transportieren kann, und wenigstens einen Bandförderer auf, der wenigstens ein Band aufweist und die zu dem wenigstens einen Abgabeort transportierten Kleinstückgüter an einem dem Abgabeort zugeordneten Aufnahmeabschnitt des Bandförderers empfangen und zu einer Abgabevorrichtung transportieren kann. Erfindungsgemäß ist in Transportrichtung des Bandförderers stromab des Aufnahmeabschnitts wenigstens eine Sperreinrichtung angeordnet, die eine über dem Band positionierbare Barriere aufweist, die einen Weitertransport der herantransportierten Stückgüter auch bei weiterbewegtem Band verhindert. Eine Steuereinrichtung steuert das Regalbediengerät und den Bandförderer derart, dass die zu einer ersten Kommission gehörenden Stückgüter zu einem ersten Abgabeort und die zu einer nachfolgenden Kommission gehörenden Stückgüter zu einem zweiten Abgabeort und/oder nachfolgend zu dem ersten Abgabeort derart transportiert werden, dass die Stückgüter der ersten Kommission stromab von den Stückgütern der nachfolgenden Kommission auf dem Bandförderer aufliegen. Die Steuereinrichtung steuert die Sperreinrichtung derart, dass die Barriere über dem Band positioniert wird, so dass der Weitertransport der Stückgüter gesperrt wird, bis sich die Stückgüter der ersten Kommission hinter der Barriere angesammelt haben, dann die Sperreinrichtung freigegeben wird, so dass die erste Kommission weitertransportiert werden kann, und dann die Barriere wieder über dem Band positioniert wird, so dass die Stückgüter der nachfolgenden Kommission hinter der Barriere angesammelt werden. Die Kleinstückgüter sind hier vorzugsweise Arzneimittelpackungen und Arzneimittel enthaltende Flaschen oder andere Behälter. Eine Kommission ist hierbei eine Gruppe gleichartiger oder verschiedenartiger Kleinstückgüter, die gemeinsam ausgegeben, insbesondere gemeinsam in einen Behälter befördert werden sollen. Der Erfindung liegt der Gedanke zugrunde, dass der kontinuierliche Transport unterschiedlicher Stückgüter auf dem Bandförderer, bei dem sich die letzte Packung einer ersten Kommission unmittelbar vor der ersten Packungen einer nachfolgenden Kommission befinden kann, in eine mehr diskontinuierliche Abgabe von Gruppen von Arzneimitteln umgewandelt wird, so dass ein Strom von Kommissionen von Kleinstückgütern entsteht, der besser in verschiedene Behälter zur Aufnahme der Kommissionen gelenkt werden kann. Im Ergebnis bildet die so konzentrierte Gruppe von Packungen, die Kommission, einen Packungsstrom, der eine kürzere Zeit für die Bewegung entlang des Bandförderers und der nachfolgenden Fördervorrichtungen benötigt. Dadurch wird es außerdem ermöglicht, dass zwei oder mehr Bandförderer parallel derart betrieben werden, dass die Gruppen der Kommissionen der verschiedenen Bandförderer ineinander verschachtelt werden können. Dadurch wird zusätzlich die Abgabegeschwindigkeit der Kommissionen an die Aufnahmebehälter erhöht.

Bei einer bevorzugten Ausführungsform weist die Sperreinrichtung eine Barriere in Form einer schwenkbaren Platte auf, die um eine quer zur Bewegungsrichtung des Bandes angeordnete Schwenkachse schwenkbar ist. Hierbei sind grundsätzlich zwei Ausführungsformen denkbar, nämlich eine um eine vertikale Schwenkachse schwenkbar Platte, wobei die Schwenkachse neben dem Förderband angeordnet ist, und eine um eine horizontale Schwenkachse schwenkbare Platte, wobei die Schwenkachse über dem Förderband angeordnet ist. Bei den Ausführungsformen mit vertikalen Schwenkachsen sind auch jeweils zwei um parallele Achsen schwenkbare Platten denkbar. Vorzugsweise jedoch ist die schwenkbare Platte an ihrem oberen Rand um eine horizontale Schwenkachse schwenkbar, wobei sie zur Freigabe der Stückgüter in Bewegungsrichtung des Bandes nach oben und zum Sperren des Weitertransports entgegen der Bewegungsrichtung des Bandes nach unten geschwenkt werden kann. Es sind auch alternative Ausführungsformen denkbar, bei denen die Sperre senkrecht nach oben oder nach unten gefahren wird.

Bei einer Weiterbildung der Erfindung ist es vorgesehen, dass zwischen jedem Abgabeort, zu dem das Regalbediengerät ein oder mehrere Stückgüter transportiert, und den zugeordneten Aufnahmeabschnitt des Bandförderers oder der Bandförderer jeweils eine Fördervorrichtung vorgesehen ist, die die von einem Regalbediengerät abgegebenen Stückgüter von dem Abgabeort zu dem Aufnahmeabschnitt weiterleitet. Dies ermöglicht eine einfachere Gestaltung der Ansteuerung des Regalbediengeräts, da auf diese Weise der Abgabeort an einer Stelle angeordnet werden kann, die sich in dem Raumbereich befindet, in dem das Regalbediengerät vor den Regalen verfährt. Die Fördervorrichtung kann beispielsweise zwischen zwei Regalböden zu der Rückseite der Regalböden geführt sein, so dass der Bandförderer auf einer dem Regalbediengerät gegenüberliegenden Seite des Lagerregals angeordnet werden kann. Im einfachsten Fall handelt es sich bei der Fördervorrichtung um eine geneigte Rutsche, in deren oberes Ende das Regalbediengerät die Kleinstückgüter abwirft und an deren unteren Ende der Aufnahmeabschnitt des Bandförderers angeordnet ist.

Bei einer bevorzugten Weiterbildung ist der Lager- und Kommissionierautomat für Kleinstückgüter durch mehrere parallel betriebene Bandförderer gekennzeichnet, deren Aufnahmeabschnitte jeweils zugehörigen Abgabeorten zugeordnet sind, wobei jeder Bandförderer wenigstens eine Sperreinrichtung aufweist. Der Parallelbetrieb mehrerer Bandförderer, die jeweils wenigstens eine Sperreinrichtung aufweisen, gestattet das Ineinander-Verschachteln der auf den jeweiligen Bändern vor den Sperreinrichtungen angesammelten Kommissionen bei deren Abgabe an die Aufnahmebehälter. Dabei wird beispielsweise auf einem ersten Bandförderer hinter einer Barriere eine erste Kommission angesammelt und dann freigegeben, wobei überlappend bereits auf dem zweiten Bandförderer hinter einer Barriere eine nächste Kommission angesammelt wird, die dann zeitlich versetzt nach Freigabe der ersten Kommission auf dem ersten Band freigegeben wird. Bei einer Weiterbildung mit mehr als zwei Bandförderern kann auf einem dritten Bandförderer zeitlich versetzt eine dritte Kommission angesammelt werden, die freigegeben wird, während auf dem ersten Bandförderer bereits eine vierte Kommission angesammelt wird. Bei dieser Ausführungsform ist es insbesondere vorteilhaft, dass jeder Bandförderer die Stückgüter zu derselben Abgabevorrichtung transportiert. Das Ansammeln der Stückgüter auf den verschiedenen Bandförderern an den Sperreinrichtungen wird derart überlappend gestaltet, dass die Abgabevorrichtung in kürzestmöglichen Zeitabständen jeweils vollständige Kommissionen empfängt, wobei die Zeitabstände allerdings so gezielt eingestellt werden können, dass beispielsweise nach dem Transportieren einer ersten Kommission in einen zugehörigen Aufnahmebehälter bis zum Eintreffen der nachfolgenden Kommission eine kurze Pause verbleibt, in der der gefüllte Aufnahmebehälter durch einen leeren Aufnahmebehälter ausgetauscht werden kann. Beispielweise befindet sich an der Abgabevorrichtung eine Rollenbahn, auf der eine Reihe leerer Aufnahmebehälter der Abgabevorrichtung zugeführt wird. Die Aufnahmebehälter werden sukzessive an der Abgabevorrichtung mit jeweils einer Kommission gefüllt und in koordinierter Taktung mit der Freigabe der Sperreinrichtungen auf den Bandförderern weiter geschoben.

Bei einer bevorzugten Weiterbildung dieser Ausführungsform weist die Abgabevorrichtung an die Enden jedes Bandförderers angrenzende Fördereinrichtungen zum Weitertransport auf, die jeweils die Stückgüter einer Kommission in einen von mehreren sukzessive an der Abgabevorrichtung positionierten Aufnahmebehältern weiterleiten. Die Fördereinrichtungen sind vorzugsweise Fallrohre, Rutschen und/oder Wendelrutschen.

Vorzugsweise sind an einem Bandförderer oder mehreren oder sämtlichen Bandförderern jeweils mehrere Sperreinrichtungen beabstandet hintereinander angeordnet, so dass mehrere Kommissionen auf dem Bandförderer angesammelt werden können. Dies gestattet eine noch bessere zeitliche Koordinierung der Zufuhr der verschiedenen angesammelten Kommissionen zu der Abgabevorrichtung zur Abgabe in vorpositionierte Aufnahmebehälter.

Eine vorteilhafte Weiterbildung des erfindungsgemäßen Lager- und Kommissionierautomaten ist **dadurch gekennzeichnet, dass** wenigstens zwei Lagerregale in einer Längsrichtung derart parallel angeordnet sind, dass zwischen den Lagerregalen eine Gasse gebildet ist, in der sich das wenigstens eine Regalbediengerät bewegt, wobei der oder die Bandförderer benachbart zu einem Lagerregal oder beiden Lagerregalen auf einer der Gasse abgewandten Seite angeordnet sind. Vorzugsweise sind zwei oder drei Regalbediengeräte in der Gasse angeordnet. Vorzugsweise sind mehrere Bandförderer übereinander in der Längsrichtung benachbart zu einem Lagerregal oder beiden Lagerregalen angeordnet, wobei die Bandförderer jeweils eine Sperreinrichtung oder mehrere Sperreinrichtungen aufweisen.

Bei einer besonders bevorzugten Ausführungsform sind vier Lagerregale in Längsrichtung parallel derart angeordnet, dass zwischen jeweils zwei äußeren Lagerregalen eine Gasse für jeweils wenigstens ein Bediengerät, vorzugsweise zwei oder drei Bediengeräte, und zwischen den mittleren Lagerregalen eine Gasse zur Aufnahme mehrerer übereinander angeordneter Bandförderer ausgebildet ist, wobei zwischen den an den die äußeren Gassen angrenzenden Abgabeorten der Regalbediengeräte und den zugeordneten Aufnahmeabschnitten der Bandförderer jeweils Fördervorrichtungen vorgesehen sind.

Bei einem erfindungsgemäßen Verfahren zum Betreiben eines Lager- und Kommissionierautomaten für Kleinstückgüter werden Kommissionen der Kleinstückgüter auf jeweils wenigstens zwei Bandförderern an deren Sperreinrichtungen angesammelt und die Sperreinrichtungen der verschiedenen Bandförderer nach Ansammlung jeweils einer Kommission zeitlich verschachtelt freigegeben, so dass eine relativ hohe Befüllfrequenz der Aufnahmebehälter an der Abgabevorrichtung erreicht werden kann. Dabei wird beispielsweise auf einem ersten Bandförderer hinter einer Barriere eine erste Kommission angesammelt und dann freigegeben, wobei überlappend bereits auf dem zweiten Bandförderer hinter einer Barriere eine nächste Kommission angesammelt wird, die dann zeitlich versetzt nach Freigabe der ersten Kommission auf dem ersten Band freigegeben wird. Bei einer Weiterbildung mit mehr als zwei Bandförderern kann auf einem dritten Bandförderer zeitlich versetzt eine dritte Kommission angesammelt werden, die freigegeben wird, während auf dem ersten Bandförderer bereits eine vierte Kommission angesammelt wird. Das Ansammeln der Stückgüter auf den verschiedenen Bandförderern an den Sperreinrichtungen wird derart überlappend gestaltet, dass die Abgabevorrichtung in kürzestmöglichen Zeitabständen jeweils vollständige Kommissionen empfängt, wobei die Zeitabstände so gezielt eingestellt werden können, dass beispielsweise nach dem Transportieren einer ersten Kommission in einen zugehörigen Aufnahmebehälter bis zum Eintreffen der nachfolgenden Kommission eine kurze Pause verbleibt, in der der gefüllte Aufnahmebehälter durch einen leeren Aufnahmebehälter ausgetauscht werden kann.

Vorteilhafte und/oder bevorzugte Weiterbildungen der Erfindung sind in den Unteransprüchen gekennzeichnet.

Im Folgenden wird die Erfindung anhand eines in den Zeichnungen dargestellten bevorzugten Ausführungsbeispiels näher erläutert. In den Zeichnungen zeigen:
Figur 1 eine schematische Draufsicht auf einen Ausschnitt eines erfindungsgemäßen Lager- und Kommissionierautomaten für Kleinstückgüter,
Figur 2 eine Schnittansicht des in Figur 1 gezeigten Lager- und Kommissionierautomaten entlang der Linie B-B der Figur 1,
Figur 3 eine Vorderansicht des in den Figuren 1 und 2 gezeigten Automaten,
Figur 4 einen vergrößerten Ausschnitt der Draufsicht gemäß Figur 1 und
Figur 5 einen vergrößerten Ausschnitt der Seitenschnittansicht gemäß Figur 2, der zwei Sperreinrichtungen zeigt.

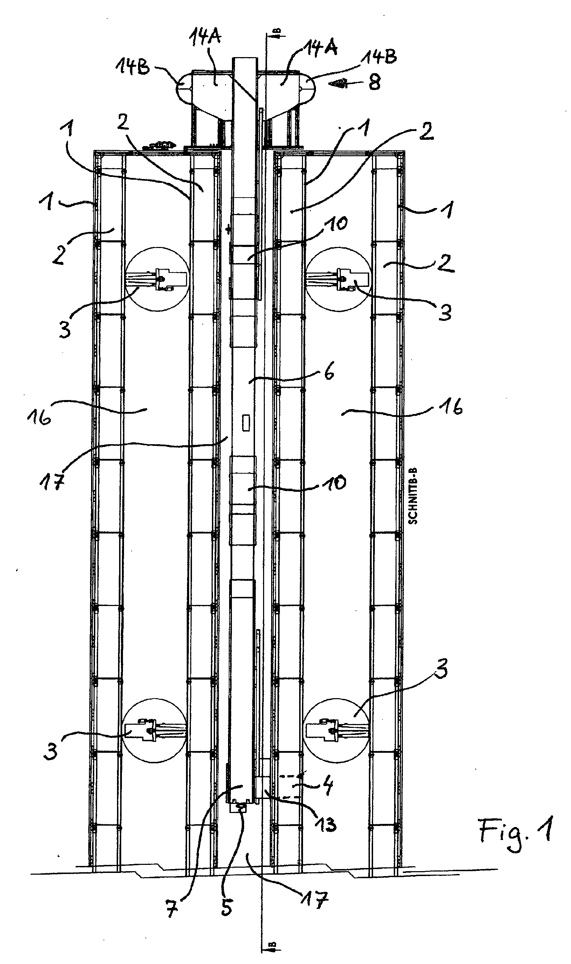

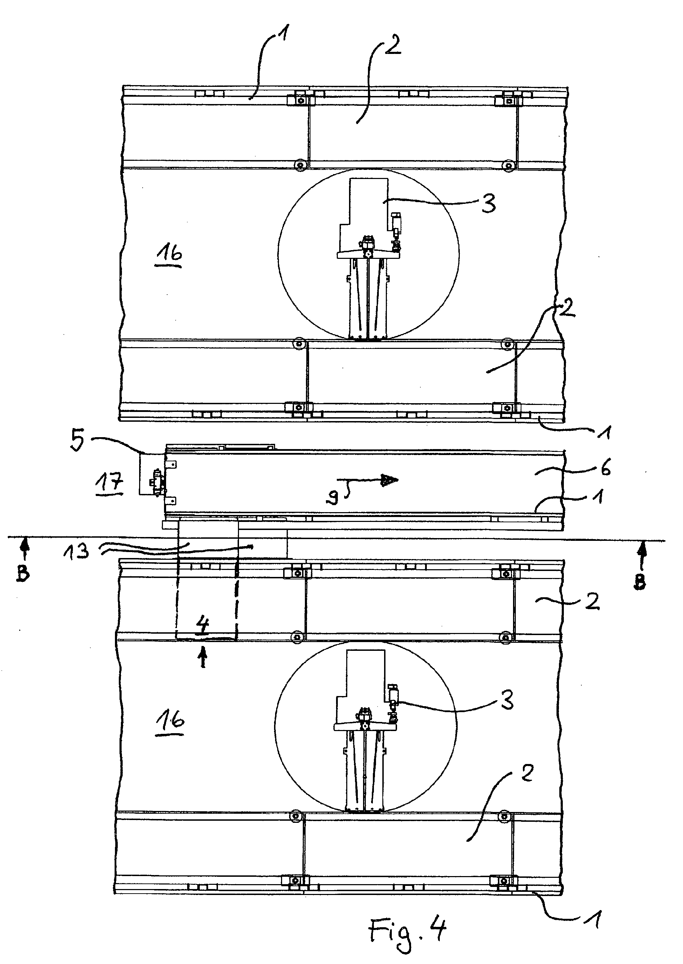

Der in den Figuren 1 bis 5 dargestellte Lager- und Kommissionierautomat für Kleinstückgüter wird zur Lagerung und Kommissionierung von Arzneimittelpackungen verwendet, die sowohl quaderförmige Packungen als auch zylindrische Behälter oder Flaschen umfassen können.

In der Draufsicht gemäß Figur 1 sind vier parallel angeordnete Lagerregale 1 zu sehen, wobei Figur 1 einen Ausschnitt zeigt, der etwa die Hälfte der Lagerregale veranschaulicht. Die Lagerregale weisen übereinander angeordnete horizontale Lagerflächen 2 auf, auf denen die Arzneimittelpackungen nebeneinander und hintereinander lagern. Zwischen den jeweils äußeren Paaren von Lagerregalen 1 ist jeweils eine Gasse 16 ausgebildet. In der Gasse 16 bewegen sich mehrere Regalbediengeräte 3, wobei bei dem Ausführungsbeispiel gemäß Figur 1 in jeder Gasse zwei Regalbediengeräte 3 gezeigt sind. Die Regalbediengeräte umfassen einen Backengreifer, wie er beispielsweise in der Druckschrift EP 2 165 950 A1 beschrieben ist. Der Backengreifer ist an einer vertikalen Schiene montiert und kann vertikal nach oben und nach unten bewegt werden. Am Fuß der Schiene befindet sich eine mit einem Antrieb versehene Halterung, die auf einer sich in Gassen-Längsrichtung erstreckenden Schiene in Längsrichtung bewegt werden kann. Darüber hinaus kann der Backengreifer um 180° um die vertikale Achse gedreht werden. Dies ist in Figur 1 durch den um die Backengreifer 3 jeweils herum gezeichneten Kreis veranschaulicht. Somit können die Backengreifer 3 horizontal und vertikal in der Ebene der Regalgassen 16 bewegt und darüber hinaus so gedreht werden, dass jeder Backengreifer 3 auf jeden Ort der zu beiden Seiten der Gassen 16 angeordneten Lagerregale 1 zugreifen kann.

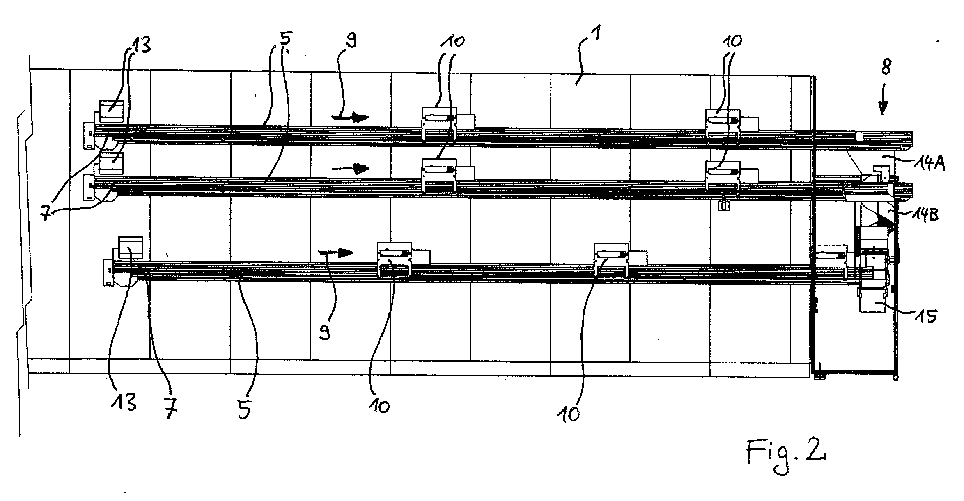

Zwischen den beiden inneren Lagerregalen 1 befindet sich eine weitere Gasse 17, in der mehrere Bandförderer 5 übereinander angeordnet sind, wie es insbesondere in der Schnittansicht gemäß Figur 2 zu erkennen ist. Bei dem in den Figuren dargestellten Ausführungsbeispiel sind in dem gezeigten Abschnitt des Lager- und Kommissionierautomaten drei Bandförderer 5 übereinander angeordnet. Jeder Bandförderer 5 weist ein umlaufendes Transportband 6 auf. Die Transportrichtung der Bandförderer 5 ist in Figur 2 durch die Pfeile 9 dargestellt. Die Bandförderer 5 weisen oberhalb des Bandes 6 seitliche Begrenzungswände auf, damit die transportierten Arzneimittelpackungen seitlich nicht herunterfallen können.

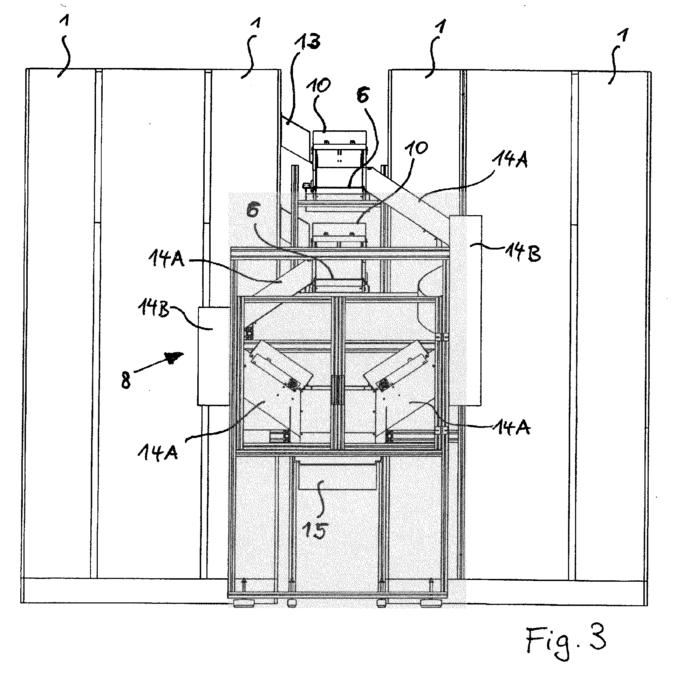

Zur Auslagerung einer Kommission von Arzneimittelpackungen, das heißt einer vorgegebenen Gruppe verschiedenartiger oder gleichartiger Arzneimittelpackungen, die für einen bestimmten Adressaten (Kunden oder beispielsweise einer Station eines Krankenhauses) vorgesehen sind, wird wie folgt vorgegangen. Durch eine (in den Figuren nicht dargestellte) Steuereinrichtung werden die Regalbediengeräte 3 veranlasst, die zu der Kommission gehörenden Arzneimittelpackungen von den Regalböden 2 zu entnehmen und zu einem Abgabeort zu transportieren. Dabei greifen die Backengreifer der Regalbediengeräte 3 jeweils eine Packung oder mehrere Packungen und ziehen diese von den horizontalen Lagerflächen (Regalböden) 3 auf einen Auflagetisch des Regalbediengeräts 3. Dann fährt das Regalbediengerät 3 zu dem Abgabeort, der in Figur 1 für eine der beiden Gassen mit dem Bezugszeichen 4 gekennzeichnet ist. An dem Abgabeort 4 werden die auf dem Tisch des Regalbediengeräts 3 aufliegenden Packungen horizontal nach vorn herausgeschoben, so dass sie beispielsweise in eine am Abgabeort 4 beginnende Rutsche 13 fallen. Die Rutsche 13 stellt die Fördervorrichtung dar, die die vom Regalbediengerät 3 abgegebenen Arzneimittelpackungen vom Abgabeort 4 zu einem Aufnahmeabschnitt 7 des Bandförderers 5 transportiert. Die ausgelagerten Arzneimittelpackungen verlassen die Rutsche 13 und treffen auf den Aufnahmeabschnitt 7 auf, der in den Figuren 1 und 3 dargestellt ist. Wie in Figur 2 zu erkennen ist, befinden sich bei dem dargestellten Ausführungsbeispiel die Aufnahmeabschnitte 7 der Bandförderer 5 jeweils am Anfang des Bandes 6 (in Transportrichtung 9 gesehen). Je nachdem, welchen Weg die Regalbediengeräte 3 zurücklegen müssen, um eine Packung von einem Regalboden 2 zu entnehmen und zu dem Abgabeort 4 zu transportieren, treffen die Arzneimittelpackungen in kürzeren oder längeren Abständen in Gruppen von jeweils 1 bis beispielsweise 4 Packungen über die Fördervorrichtungen 13 auf die Aufnahmeabschnitte 7 der Bandförderer 5 auf. Die Bandförderer 5 transportieren die Packungen entlang der Richtung 9 bis zu einer Abgabevorrichtung 8. Bei der Abgabevorrichtung 8 verlassen die Arzneimittelpackungen die Bandförderer 5 und werden über Rutschen 14A und Wendelrutschen 14B in einen unter dem untersten Bandförderer 5 angeordneten Aufnahmebehälter 15 transportiert. Die Abgabevorrichtung 8 ist so ausgebildet, dass gleichzeitig über die Bandförderer 5 eintreffende Arzneimittelpackungen in den unter der Abgabevorrichtung 8 positionierten Aufnahmebehälter 15 weitergeleitet werden. Die Aufnahmebehälter 15 sind beispielsweise quaderförmige Kunststoffbehälter, welche auf einer Rollenbahn in einer zur Zeichnungsebene der Figur 2 senkrechten Richtung unter der Abgabevorrichtung 8 entlang verfahrbar sind. Sobald ein Aufnahmebehälter 15 gefüllt ist, wird er auf der Rollenbahn weitergeführt, so dass ein neuer, leerer Aufnahmebehälter an die Aufnahmeposition unter der Abgabevorrichtung 8 positioniert werden kann. Die Rollenbahn und die Einrichtungen zum Heranführen und Weiterleiten der Aufnahmebehälter 15 sind in den Figuren nicht dargestellt.

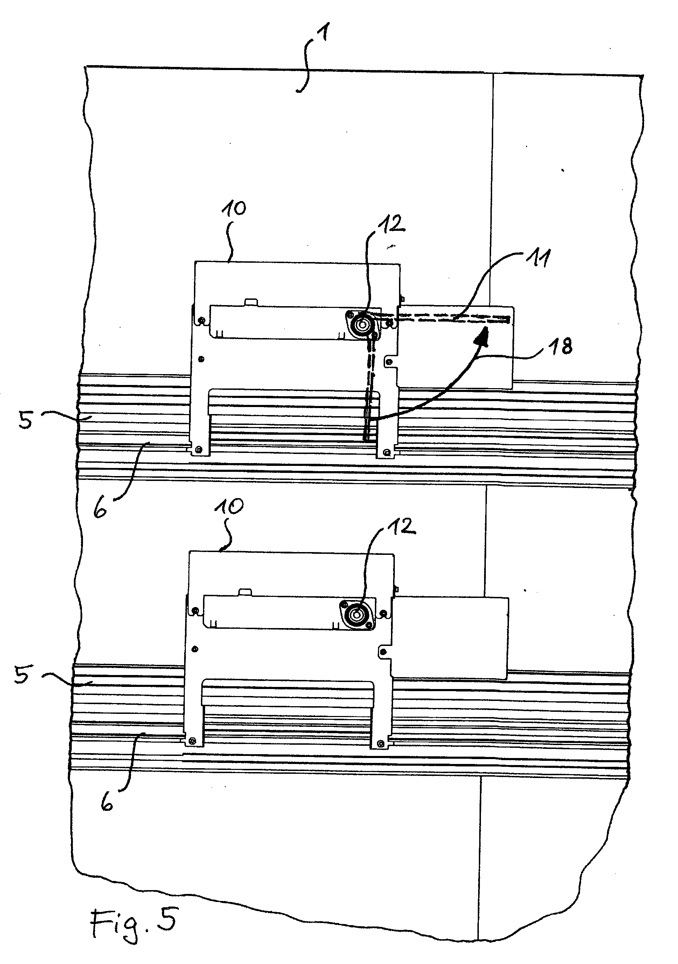

Wie insbesondere in der Figur 2 zu erkennen ist, sind über jedem der drei Bandförderer 5 jeweils zwei Sperreinrichtungen 10 angeordnet. Die Sperreinrichtungen 10 weisen eine über dem Band 6 positionierbare Barriere 11 auf, die insbesondere in Figur 5 in der oberen der beiden dort gezeigten Sperreinrichtungen 10 veranschaulicht ist. Die Barriere wird beispielsweise von einer um eine Achse 12 schwenkbaren Platte 11 gebildet. Zur Freigabe des Transports der Arzneimittelpackungen in Bewegungsrichtung 9 wird die Platte 11 in Bewegungsrichtung des Bandes 6 bogenförmig nach oben geschwenkt, wie es durch den Pfeil 18 in Figur 5 angedeutet ist. Zum Sperren des Weitertransports wird die Platte 11 wieder nach unten geschwenkt, so dass sie etwa senkrecht positioniert ist. Jede Sperreinrichtung 10 weist einen (in den Figuren nicht gezeigten) eigenen Antrieb zum Schwenken der Barriere 11 auf.

Kern der erfindungsgemäßen Vorsehens der Sperreinrichtungen 10 an den Bandförderern 5 ist es, dass mit deren Hilfe der kontinuierliche Strom von Arzneimittelpackungen, die von den Regalbediengeräten 3 über die Fördervorrichtungen 13 auf die Aufnahmeabschnitte 7 der Bandförderer 5 aufgelegt werden und bei dem die Arzneimittelpackungen mehr oder weniger unterschiedliche Abstände haben, in einen Strom von Ansammlungen (Kommissionen) einer größeren Anzahl von Arzneimittelpackungen mit vorgegebenen Abständen (zeitlich und zugleich örtlich auf den Bändern) umgewandelt werden kann. Dies ermöglicht ein schnelleres Befüllen einer Reihe von nacheinander zu der Abgabevorrichtung 8 transportierten Aufnahmebehältern 15. Die einzelnen Regalbediengeräte 3 werden beispielsweise so angesteuert, dass die Arzneimittelpackungen einer ersten Kommission auf dem obersten Bandförderer 5 transportiert werden, wobei eine in Transportrichtung 9 erste Sperreinrichtung 10 in der Sperrstellung positioniert ist, so dass sich die nacheinander von den Regalbediengeräten 3 auf das Band aufgelegten Packungen der ersten Kommission an dieser Sperreinrichtung ansammeln. Zugleich können die Regalbediengeräte 3 Packungen einer zweiten und/oder dritten Kommission auf die Aufnahmeabschnitte 7 des zweiten und des dritten Bandförderers 5 transportieren, wobei auch deren erste Sperreinrichtungen 10 gesperrt sind, so dass sich die zweite und die dritte Kommission an den Sperreinrichtungen des mittleren bzw. des untersten Bandförderers 5 ansammeln. Sobald eine Kommission vollständig vor einer Sperreinrichtung 10 angesammelt ist, was jeweils zu unterschiedlichen Zeitpunkten auf den einzelnen Bandförderern 5 geschehen kann, wird die zugehörige Barriere 11 in die Freigabeposition geschwenkt und wird die Barriere 11 der in Transportrichtung 9 nachfolgenden Sperreinrichtung 10 in die Sperrstellung gebracht, so dass die gesamte Kommission auf dem Bandförderer 5 weitertransportiert wird, bis sie die stromab gelegene zweite Sperreinrichtung 10 erreicht hat. Sobald die letzte Arzneimittelpackung der Kommission die stromauf gelegene Sperreinrichtung 10 verlassen hat, wird deren Barriere 11 wieder in die Sperrstellung gebracht, woraufhin von den Regalbediengeräten 3 auf diesen Bandförderer 5 Arzneimittelpackungen einer vierten oder weiteren Kommission aufgelegt werden können. Auf diese Weise können jeweils zwei Kommissionen, also insgesamt sechs Kommissionen bei dem in Figur 2 dargestellten Ausführungsbeispiel, auf den Bandförderern 5 angesammelt werden. Diese sechs Kommissionen können nunmehr in relativ kurzer Zeit in sechs zugehörige Aufnahmebehälter 15 transportiert werden, indem die zugehörigen Sperreinrichtungen 10 zeitlich versetzt freigegeben werden, so dass jeweils eine Kommission die letzte stromab gelegene Sperreinrichtung 10 verlässt und über den Bandförderer, die Rutschen 14A und 14B in den zugehörigen Aufnahmebehälter 15 gelangt. Da sich die gesamte Kommission auf einem örtlich kurzen Abschnitt des Bandes 6 des Bandförderers 5 angesammelt hat, wird eine relativ kurze Zeit benötigt, um die gesamte Kommission in den Aufnahmebehälter 15 einzufüllen. Sobald dies geschehen ist, kann der nächste Aufnahmebehälter 15 zur Aufnahme der nächsten Kommission unter die Abgabevorrichtung 8 positioniert werden. Zugleich wird die nächste Sperreinrichtung 10 freigegeben, usw.

Kern dieses erfindungsgemäßen Auslagerungsverfahrens ist somit die Kombination des Ansammelns der Kommissionen auf einem relativ kurzen Abschnitt des Bandförderers 5 an den jeweiligen Sperreinrichtungen 10 in Verbindung mit der zeitlich verschachtelten Freigabe der Sperreinrichtungen, so dass eine relativ hohe Befüllfrequenz der Aufnahmebehälter 15 an der Abgabevorrichtung 8 erreicht werden kann.

Figur 3 zeigt eine Stirnseite der vier Lagerregale mit einer Ausführungsform der Abgabevorrichtung 8. Der oberste Bandförderer 5 weist eine (in Figur 1 erkennbare) schräge, über dem Band 6 positionierte Ablenkplatte auf, an der die Arzneimittelpackungen anschlagen und dabei das Band seitlich verlassen und dann über die oberste Rutsche 14A (ebenfalls in Figur 1 sichtbar), eine Wendelrutsche 14B (in Figur 3 ist neben der vertikalen Verkleidung eine Halbschleife der Wendel erkennbar) und eine weitere Rutsche 14A zu dem Aufnahmebehälter 15 gelangen. An dem mittleren Bandförderer 5 ist ebenfalls eine schräge Rutsche 14A, eine kurze Wendelrutsche 14B und eine weitere schräge Rutsche 14A vorgesehen. Das unterste Transportband endet stirnseitig direkt über dem Aufnahmebehälter 15.

Im Rahmen des Erfindungsgedankens sind zahlreiche alternative Ausführungsformen denkbar. Zunächst kann die Anzahl der parallel angeordneten Regale 1, die Anzahl der in den Regalgassen verfahrbaren Regalbediengeräte 3, die Anzahl der Bandförderer 5 und die Anzahl der Sperreinrichtungen 10 auf den Bandförderern 5 je nach Bedarf variiert werden. Die Regale brauchen auch nicht exakt entlang einer Raumrichtung angeordnet zu sein; es sind auch bogenförmige Gassengestaltungen oder abgewinkelte Gassen denkbar. Bei alternativen Gestaltungen können auch Lagerformen eingesetzt werden, bei denen die Arzneimittelpackungen nicht auf ebenen Regalböden, sondern in geneigten Lagerschächten gelagert sind, wobei die Regalbediengeräte geneigte Transportschächte aufweisen können. Die Regalbediengeräte können sowohl Backengreifer als auch Sauggreifer aufweisen. Auch sind Anordnungen mit Schiebeeinrichtungen zum Herausschieben von Arzneimittelpackungen aus Lagerkanälen denkbar. Die Aufnahmeabschnitte 7 zum Aufnehmen der ausgelagerten Arzneimittelpackungen können (wie beispielsweise in Figur 2) sowohl an einem Ende der Bandförderer 5 als auch zusätzlich noch an einem weiteren Ort des Bandförderers 5, beispielsweise zwischen zwei Sperreinrichtungen 10 angeordnet sein. Auf diese Weise wäre es beispielsweise denkbar, dass zwei beabstandet angeordnete Sperreinrichtungen 10 auf einem Bandförderer 5 gleichzeitig gesperrt sind, wobei über eine am Bandende angeordnete erste Fördervorrichtung 13 die Stückgüter einer Kommission der in Transportrichtung 9 stromauf angeordneten ersten Sperreinrichtung 10 zugeführt werden, während Stückgüter einer zweiten Kommission über eine weitere (stromab der stromauf gelegenen ersten Sperreinrichtung 10 angeordnete) Fördervorrichtung 13 dem Bandförderer 5 zugeführt werden. Es sind auch Anordnungen denkbar, bei denen an der Abgabevorrichtung 8 gleichzeitig mehrere Aufnahmebehälter befüllt werden können, indem die Fördereinrichtungen 14 zwischen den Enden der Bandförderer 5 und den Positionen der mehreren Aufnahmebehälter 15 entsprechend umschaltbar sind.

## Patentansprüche

1. Lager- und Kommissionierautomat für Kleinstückgüter mit wenigstens einem Lagerregal (1) mit Lagerflächen (2) zur geordneten Lagerung der Kleinstückgüter, wenigstens einem benachbart zu dem Lagerregal verfahrbaren Regalbediengerät (3), das jeweils ein oder mehrere Kleinstückgüter von einer Lagerfläche (2) entnehmen und zu wenigstens einem Abgabeort (4) transportieren kann, und wenigstens einem Bandförderer (5), der wenigstens ein Band (6) aufweist und die zu dem wenigstens einen Abgabeort transportierten Kleinstückgüter an einem dem Abgabeort zugeordneten Aufnahmeabschnitt (7) des Bandförderers (5) empfangen und zu einer Abgabevorrichtung (8) transportieren kann,
**dadurch gekennzeichnet,**
**dass** in Transportrichtung (9) des Bandförderers (5) stromab des Aufnahmeabschnitts (7) wenigstens eine Sperreinrichtung (10) angeordnet ist, die eine über dem Band (6) positionierbare Barriere (11) aufweist, die einen Weitertransport der herantransportierten Stückgüter auch bei weiterbewegtem Band (6) verhindert,
**dass** eine Steuereinrichtung das Regalbediengerät (3) und den Bandförderer (5) derart steuert, dass die zu einer ersten Kommission gehörenden Stückgüter zu einem ersten Abgabeort (4) und die zu einer nachfolgenden Kommission gehörenden Stückgüter zu einem zweiten Abgabeort und/oder nachfolgend zu dem ersten Abgabeort (4) derart transportiert werden, dass die Stückgüter der ersten Kommission stromab von den Stückgütern der nachfolgenden Kommission auf dem Bandförderer (5) aufliegen,
wobei die Steuereinrichtung die Sperreinrichtung (10) derart steuert, dass die Barriere (11) über dem Band (6) positioniert wird, so dass der Weitertransport der Stückgüter gesperrt wird, bis sich die Stückgüter der ersten Kommission hinter der Barriere (11) angesammelt haben, dann die Sperreinrichtung (10) freigegeben wird, so dass die erste Kommission weitertransportiert werden kann, und dann die Barriere (11) wieder über dem Band (6) positioniert wird, so dass die Stückgüter der nachfolgenden Kommission hinter der Barriere (11) angesammelt werden.

2. Lager- und Kommissionierautomat für Kleinstückgüter nach Anspruch 1, **dadurch gekennzeichnet, dass** die Sperreinrichtung (10) eine Barriere in Form einer schwenkbare Platte (11) aufweist, die um eine quer zur Bewegungsrichtung des Bandes (6) angeordnete Schwenkachse (12) schwenkbar ist.

3. Lager- und Kommissionierautomat für Kleinstückgüter nach Anspruch 2, **dadurch gekennzeichnet, dass** die schwenkbare Platte (11) an ihrem oberen Rand um eine horizontale Schwenkachse (12) schwenkbar ist, wobei sie zur Freigabe der Stückgüter in Bewegungsrichtung des Bandes (6) nach oben und zum Sperren des Weitertransports entgegen der Bewegungsrichtung des Bandes (6) nach unten geschwenkt wird.

4. Lager- und Kommissionierautomat für Kleinstückgüter nach einem der Ansprüche 1 - 3, **dadurch gekennzeichnet, dass** zwischen jedem Abgabeort (4) und dem zugeordneten Aufnahmeabschnitt (7) des Bandförderers (5) oder der Bandförderer (5) jeweils eine Fördervorrichtung (13) vorgesehen ist, die die von einem Regalbediengerät (3) abgegebenen Stückgüter von dem Abgabeort (4) zu dem Aufnahmeabschnitt (7) weiterleitet.

5. Lager- und Kommissionierautomat für Kleinstückgüter nach einem der Ansprüche 1 - 4, **gekennzeichnet durch** mehrere parallel betriebene Bandförderer (5), deren Aufnahmeabschnitte (7) jeweils zugehörigen Abgabeorten (4) zugeordnet sind, wobei jeder Bandförderer (5) wenigstens eine Sperreinrichtung (10) aufweist.

6. Lager- und Kommissionierautomat für Kleinstückgüter nach Anspruch 5, **dadurch gekennzeichnet, dass** jeder Bandförderer (5) die Stückguter zu derselben Abgabevorrichtung (8) transportiert.

7. Lager- und Kommissionierautomat für Kleinstückgüter nach Anspruch 6, **dadurch gekennzeichnet, dass** die Abgabevorrichtung (8) an die Enden jedes Bandförderers (5) angrenzende Fördereinrichtungen (14) zum Weitertransport aufweist, die jeweils die Stückgüter einer Kommission in einen von mehreren sukzessive an der Abgabevorrichtung (8) positionierten Aufnahmebehältern (15) weiterleiten.

8. Lager- und Kommissionierautomat für Kleinstückgüter nach Anspruch 7, **dadurch gekennzeichnet, dass** die Fördereinrichtungen (14) Fallrohre, Rutschen (14A) und/oder Wendelrutschen (14B) umfassen.

9. Lager- und Kommissionierautomat für Kleinstückgüter nach einem der Ansprüche 1 - 8, **dadurch gekennzeichnet, dass** an einem, mehreren oder sämtlichen Bandförderern (5) jeweils mehrere Sperreinrichtungen (10) beabstandet hintereinander angeordnet sind, so dass mehrere Kommissionen auf dem Bandförderer (5) angesammelt werden können.

10. Lager- und Kommissionierautomat für Kleinstückgüter nach einem der Ansprüche 1 - 9, **dadurch gekennzeichnet, dass** wenigstens zwei Lagerregale (1) in einer Längsrichtung derart parallel angeordnet sind, dass zwischen den Lagerregalen (1) eine Gasse (16) gebildet ist, in der sich das wenigstens eine Regalbediengerät (3) bewegt, wobei der oder die Bandförderer (5) benachbart zu einem Lagerregal oder beiden Lagerregalen (1) auf einer der Gasse (16) abgewandten Seite angeordnet sind.

11. Lager- und Kommissionierautomat für Kleinstückgüter nach Anspruch 10, **dadurch gekennzeichnet, dass** mehrere Bandförderer (5) übereinander in der Längsrichtung benachbart zu einem Lagerregal oder beiden Lagerregalen (1) angeordnet sind, wobei die Bandförderer (5) jeweils eine oder mehrere Sperreinrichtungen (10) aufweisen.

12. Lager- und Kommissionierautomat für Kleinstückgüter nach Anspruch 10 oder 11, **dadurch gekennzeichnet, dass** wenigstens zwei Regalbediengeräte (3) vorgesehen sind, die sich unabhängig voneinander in einer Gasse (16) bewegen können.

13. Lager- und Kommissionierautomat für Kleinstückgüter nach einem der Ansprüche 10 - 12, **dadurch gekennzeichnet, dass** vier Lagerregale (1) in Längsrichtung parallel derart angeordnet sind, dass zwischen jeweils zwei äußeren Regalen (1) eine Gasse (16) für jeweils wenigstens ein Bediengerät (3) und zwischen den mittleren Lagerregalen (1) eine Gasse (17) zur Aufnahme mehrerer übereinander angeordneter Bandförderer (5) ausgebildet ist, wobei zwischen den an die äußeren Gassen (16) angrenzenden Abgabeorten (4) der Regalbediengeräte (3) und den zugeordneten Aufnahmeabschnitten (7) der Bandförderer (5) jeweils Fördervorrichtungen (13) vorgesehen sind.

14. Verfahren zum Betreiben eines Lager- und Kommissionierautomaten für Kleinstückgüter nach einem der Ansprüche 5 - 13, mit mehreren parallel betriebenen Bandförderern (5), deren Aufnahmeabschnitte (7) jeweils zugehörigen Abgabeorten (4) zugeordnet sind, wobei jeder Bandförderer (5) wenigstens eine Sperreinrichtung (10) aufweist, wobei
Kommissionen der Kleinstückgüter auf jeweils wenigstens zwei Bandförderern (5) an deren Sperreinrichtungen (10) angesammelt und
die Sperreinrichtungen (10) der verschiedenen Bandförderer (5) nach Ansammlung jeweils einer Kommission zeitlich verschachtelt freigegeben werden.

## Claims

1. A storage and automatic order picking machine for small piece goods, with at least one storage shelf (1) that has storage areas (2) for the ordered storage of the small piece goods, at least one shelf manipulating unit (3) that can be displaced adjacent to the storage shelf and respectively remove one or more small piece goods from a storage area (2), as well as transport these small piece goods to at least one delivery point (4), and at least one belt conveyor (5) with at least one belt (6) that can receive the small piece goods transported to the at least one delivery point at a receiving section (7) of the belt conveyor (5) assigned to the delivery point and transport these small piece goods to a delivery device (8),
**characterized in**
**that** at least one blocking device (10) is arranged downstream of the receiving section (7) referred to the transport direction (9) of the belt conveyor (5), wherein said blocking device features a barrier (11) that can be positioned above the belt (6) and prevents the further transport of the piece goods transported up to this point even if the belt (6) continues to move, and in
**that** a control device controls the shelf manipulating unit (3) and the belt conveyor (5) in such a way that the piece goods belonging to a first order are transported to a first delivery point (4) and the piece goods belonging to a following order are transported to a second delivery point and/or subsequently transported to the first delivery point (4) in such a way that the piece goods of the first order lie on the belt conveyor (5) downstream of the piece goods of the following order,
wherein the control device controls the blocking device (10) in such a way that the barrier (11) is positioned above the belt (6) in order to block the further transport of the piece goods until the piece goods of the first order have been gathered behind the barrier (11), the blocking device (10) is then released such that the further transport of the first order can take place and the barrier (11) is subsequently once again positioned above the belt (6) such that the piece goods of the following order are gathered behind the barrier (11).

2. The storage and automatic order picking machine for small piece goods according to claim 1, **characterized in that** the blocking device (10) features a barrier in the form of a pivotable plate (11) that can be pivoted about a pivoting axis (12) arranged transverse to the moving direction of the belt (6).

3. The storage and automatic order picking machine for small piece goods according to claim 2, **characterized in that** the pivotable plate (11) can be pivoted about a horizontal pivoting axis (12) on its upper edge, wherein said plate is pivoted upward in the moving direction of the belt (6) in order to release the piece goods and pivoted downward opposite to the moving direction of the belt (6) in order to block the further transport of the piece goods.

4. The storage and automatic order picking machine for small piece goods according to one of claims 1 - 3, **characterized in that** a conveying device (13) is respectively provided between each delivery point (4) and the associated receiving section (7) of the belt conveyor (5) or belt conveyors (5), wherein said conveying device transfers the piece goods delivered by a shelf manipulating unit (3) from the delivery point (4) to the receiving section (7).

5. The storage and automatic order picking machine for small piece goods according to one of claims 1 - 4, **characterized by** several belt conveyors (5) that are operated in parallel and the receiving sections (7) of which are respectively assigned to associated delivery points (4), wherein each belt conveyor (5) features at least one blocking device (10).

6. The storage and automatic order picking machine for small piece goods according to claim 5, **characterized in that** each belt conveyor (5) transports the piece goods to the same delivery device (8).

7. The storage and automatic order picking machine for small piece goods according to claim 6, **characterized in that** the delivery device (8) features conveying devices (14) that adjoin the ends of each belt conveyor (5) for the further transport of the piece goods, wherein said conveying devices respectively transfer the piece goods of one order into one of several receptacles (15) that are successively positioned on the delivery device (8).

8. The storage and automatic order picking machine for small piece goods according to claim 7, **characterized in that** the conveying devices (14) comprise gravity tubes, chutes (14A) and/or spiral chutes (14B).

9. The storage and automatic order picking machine for small piece goods according to one of claims 1 - 8, **characterized in that** several blocking devices (10) are respectively arranged at a distance from one another on one, several or all belt conveyors (5) such that several orders can be gathered on the belt conveyor (5).

10. The storage and automatic order picking machine for small piece goods according to one of claims 1 - 9, **characterized in that** at least two storage shelves (1) are arranged in parallel in a longitudinal direction such that an aisle (16), in which the at least one shelf manipulating unit (3) moves, is formed between the storage shelves (1), wherein the belt conveyor or belt conveyors (5) are arranged adjacent to a storage shelf or both storage shelves (1) on a far side of the aisle (16).

11. The storage and automatic order picking machine for small piece goods according to claim 10, **characterized in that** several belt conveyors (5) are arranged on top of one another in the longitudinal direction adjacent to a storage shelf or both storage shelves (1), wherein the belt conveyors (5) respectively feature one or more blocking devices (10).

12. The storage and automatic order picking machine for small piece goods according to claim 10 or 11, **characterized in that** at least two shelf manipulating units (3) are provided and can move independently of one another in an aisle (16).

13. The storage and automatic order picking machine for small piece goods according to one of claims 10 - 12, **characterized in that** four storage shelves (1) are arranged in parallel in the longitudinal direction such that an aisle (16) for at least one manipulating unit (3) is respectively formed between two outer shelves (1) and an aisle (17) for accommodating several belt conveyors (5) arranged on top of one another is formed between the central storage shelves (1), wherein conveying devices (13) are respectively provided between the delivery points (4) of the shelf manipulating units (3) situated adjacent to the outer aisles (16) and the associated receiving sections (7) of the belt conveyors (5).

14. A method for operating a storage and automatic order picking machine for small piece goods according to one of claims 5 - 13, with several belt conveyors (5) that are operated in parallel and the receiving sections (7) of which are respectively assigned to associated delivery points (4), wherein each belt conveyor (5) features at least one blocking device (10), wherein
orders of the small piece goods are respectively gathered on at least two belt conveyors (5) at the blocking devices (10) thereof, and wherein
the blocking devices (10) of the different belt conveyors (5) are released in a time-interleaved fashion after an order has respectively been gathered.

## Revendications

1. Automate de stockage et de préparation pour marchandises de petite taille, comportant au moins un rayon de stockage (1) comportant des surfaces de stockage (2) pour le stockage ordonné des marchandises de petite taille, au moins un appareil de service de rayons (3), déplaçable à proximité du rayon de stockage et qui peut respectivement prendre une ou plusieurs marchandises de petite taille sur une surface de stockage (2) et les transporter vers au moins un lieu de dépôt (4), et au moins un convoyeur à bande (5) qui présente au moins une bande (6) et qui peut recevoir les marchandises de petite taille transportées sur l'au moins un lieu de dépôt vers une section réceptrice (7) du convoyeur à bande (5) affectée au lieu de dépôt et les transporter vers un dispositif de dépôt (8),
**caractérisé en ce**
**que** dans le sens de transport (9) du convoyeur à bande (5), en aval de la section réceptrice (7), est disposé au moins un dispositif de blocage (10) qui présente une barrière (11) positionnable au-dessus de la bande (6) et qui empêche une poursuite du transport des marchandises transportées même si la bande (6) continue de se déplacer,
**qu'**un dispositif de commande commande l'appareil de service de rayons (3) et le convoyeur à bande (5) de manière à ce que les marchandises faisant partie d'un premier lot de préparation soient transportées vers un premier lieu de dépôt (4) et les marchandises faisant partie d'un lot de préparation suivant vers un second lieu de dépôt (4) et/ou successivement vers le premier lieu de dépôt (4) de manière à ce que les marchandises du premier lot de préparation reposent en aval des marchandises du lot de préparation suivant sur le convoyeur à bande (5),
le dispositif de commande commandant le dispositif de blocage (10) de manière à ce que la barrière (11) soit positionnée au-dessus de la bande (6), de sorte que la poursuite du transport du premier lot de préparation est bloquée jusqu'à ce que les marchandises du premier lot de préparation se soient rassemblées derrière la barrière (11), et ensuite que le dispositif de blocage (10) est débloqué, de sorte que le premier lot de préparation peut être transporté plus loin, puis que la barrière (11) est à nouveau positionnée au-dessus de la bande (6), de sorte que les marchandises du lot de préparation suivant se rassemblent derrière la barrière (11).

2. Automate de stockage et de préparation pour marchandises de petite taille selon la revendication 1, **caractérisé en ce que** le dispositif de blocage (10) présente une barrière sous forme d'une plaque pivotable (11) qui peut pivoter autour d'un axe de pivotement (12) disposé transversalement par rapport au sens de mouvement de la bande (6).

3. Automate de stockage et de préparation pour marchandises de petite taille selon la revendication 2, **caractérisé en ce que** la plaque pivotable (11) peut pivoter par son bord supérieur autour d'un axe de pivotement horizontal (12), sachant que, pour débloquer les marchandises dans le sens de mouvement de la bande (6), elle pivote vers le haut et, pour bloquer la poursuite du transport dans le sens inverse au sens de mouvement de la bande (6), elle pivote vers le bas.

4. Automate de stockage et de préparation pour marchandises de petite taille selon une des revendications 1 à 3, **caractérisé en ce que**, entre chaque lieu de dépôt (4) et la section réceptrice affectée (7) du convoyeur à bande (5) ou des convoyeurs à bande (5), il est prévu respectivement un dispositif de transport (13) qui transfère les marchandises déposées par un appareil de service de rayons (3) du lieu de dépôt (4) à la section réceptrice (7).

5. Automate de stockage et de préparation pour marchandises de petite taille selon une des revendications 1 à 4, **caractérisé par** plusieurs convoyeurs à bande (5) fonctionnant parallèlement, dont les sections réceptrices (7) sont respectivement affectées à des lieux de dépôt correspondants (4), chaque convoyeur à bande (5) présentant au moins un dispositif de blocage (10).

6. Automate de stockage et de préparation pour marchandises de petite taille selon la revendication 5, **caractérisé en ce que** chaque convoyeur à bande (5) transporte les marchandises vers le même dispositif de dépôt (8).

7. Automate de stockage et de préparation pour marchandises de petite taille selon la revendication 6, **caractérisé en ce que** le dispositif de dépôt (8) présente des systèmes de transport (14) adjacents aux extrémités de chaque convoyeur à bande (5) pour la poursuite du transport, lesquels systèmes de transport transfèrent les marchandises d'un lot de préparation dans un conteneur récepteur parmi plusieurs (15) positionnés successivement au niveau du dispositif de dépôt (8).

8. Automate de stockage et de préparation pour marchandises de petite taille selon la revendication 7, **caractérisé en ce que** les systèmes de transport (14) comprennent des tuyaux de chute, des toboggans (14A) et/ou des glissières hélicoïdales (14B).

9. Automate de stockage et de préparation pour marchandises de petite taille selon une des revendications 1 à 8, **caractérisé en ce que**, sur un, plusieurs ou la totalité des convoyeurs à bande (5) sont disposés les uns derrière les autres respectivement plusieurs dispositifs de blocage (10) espacés, de sorte que plusieurs lots de préparation peuvent être rassemblés sur le convoyeur à bande (5).

10. Automate de stockage et de préparation pour marchandises de petite taille selon une des revendications 1 à 9, **caractérisé en ce qu'**au moins deux rayons de stockage (1) sont disposés parallèlement dans un sens longitudinal de manière à former entre les rayons de stockage (1) un couloir (16) dans lequel l'au moins un appareil de service de rayons (3) se déplace, le ou les convoyeurs à bande (5) étant disposés à proximité d'un rayon de stockage ou des deux rayons de stockage (1) sur un côté détourné du couloir (16).

11. Automate de stockage et de préparation pour marchandises de petite taille selon la revendication 10, **caractérisé en ce que** plusieurs convoyeurs à bande (5) sont disposés superposés dans le sens longitudinal à proximité d'un rayon de stockage ou des deux rayons de stockage (1), les convoyeurs à bande (5) présentant respectivement un ou plusieurs dispositifs de blocage (10).

12. Automate de stockage et de préparation pour marchandises de petite taille selon la revendication 10 ou 11, **caractérisé en ce que** sont prévus au moins deux appareils de service de rayons (3) qui peuvent se déplacer indépendamment l'un de l'autre dans un couloir (16).

13. Automate de stockage et de préparation pour marchandises de petite taille selon une des revendications 10 à 12, **caractérisé en ce que** quatre rayons de stockage (1) sont disposés parallèlement dans le sens longitudinal de manière à ce que, entre respectivement deux rayons extérieurs (1), soit formé un couloir (16) pour au moins un appareil de service (3) et, entre les rayons de stockage médians (1), un couloir (17) destiné à recevoir plusieurs convoyeurs à bande (5) superposés, des dispositifs de transport (13) étant prévus respectivement entre les lieux de dépôt (4) adjacents aux couloirs extérieurs (16) des appareils de service de rayons (3) et les sections réceptrices associées (7) des convoyeurs à bande (5).

14. Procédé d'utilisation d'un automate de stockage et de préparation pour marchandises de petite taille selon une des revendications 5 à 13 comportant plusieurs convoyeurs à bande (5) fonctionnant parallèlement, dont les sections réceptrices (7) sont affectées à des lieux de dépôt respectivement correspondants (4), dans lequel chaque convoyeur à bande (5) présente au moins un dispositif de blocage (10),
dans lequel des lots de préparation de marchandises sont rassemblés sur respectivement au moins deux convoyeurs à bande (5) au niveau de leurs dispositifs de blocage (10) et
les dispositifs de blocage (10) des différents convoyeurs à bande (5) sont débloqués en interconnexion chronologique après rassemblement de respectivement un lot de préparation.
